# EUROPÄISCHE PATENTSCHRIFT

(11) **EP 2 557 206 B1**
(45) Veröffentlichungstag und Bekanntmachung des Hinweises auf die Patenterteilung: **12.03.2014**
(21) Anmeldenummer: 12179492.9
(22) Anmeldetag: 07.08.2012
(51) Int. Cl.: D01D 1/02, D01F 1/10, D01F 6/60, D01D 5/00, B01D 39/16, D04H 1/728

(54) **Verfahren zur Herstellung eines Polyamid-Nanofaser-Produkts mittels Elektrospinnen, Polyamid-Nanofaser-Produkt, ein Filtermedium mit Polyamid-Nanofaser-Produkt sowie ein Filterelement mit einem solchen Filtermedium**
Method for manufacturing a polyamide nanofibre product by electrospinning; polyamide nanofibre product; a filter medium with the polyamide nanofibre product and a filter element with such a filter medium.
Procédé de fabrication d'un produit en nano-fibres de polyamide par électrofilage, produit en nano-fibres de polyamide, un support de filtre équipé du produit en nano-fibres de polyamide ainsi qu'un élément de filtre doté d'un tel support de filtre

(30) Priorität: 09.08.2011 DE 102011109767
(43) Veröffentlichungstag der Anmeldung: 13.02.2013
(73) Patentinhaber: MANN + HUMMEL GMBH, 71638 Ludwigsburg (DE)
(72) Erfinder: Behrendt, Dr. Nico, 38444 Wolfsburg (DE); Kreiner, Anton, 94419 Reisbach (DE); Steinbrunner, Maximilian, 84163 Marklkofen (DE); Brosi, Heiko, 71720 Oberstenfeld (DE); Schmid, Dr. Björn, 70469 Stuttgart (DE)

(56) Entgegenhaltungen:
- CN-A- 101 994 161
- US-A1- 2010 173 551
- US-A1- 2010 193 999
- MENINI RICHARD; FARZANEH MASOUD: "Production of superhydrophobic polymer fibers with embedded particles using the electrospinning technique", POLYMER INTERNATIONAL, Bd. 57, 20. November 2007 (2007-11-20), Seiten 77-84, XP002687031, DOI: 10.1002/pi.2315
- SI JUN ZHU, YUAN YUAN ZHOU, OCHI TAKASHI, GANG WU: "Preparation of Polytetrafluoroethylene Ultrafine Fiber Mats with Electrospinning Process", MATERIALS SCIENCE FORUM, Bd. 675-677, 28. Februar 2011 (2011-02-28) , Seiten 827-830, XP002687032, DOI: 10.4028/www.scientific.net/MSF.675-677.827

## Beschreibung

### Technisches Gebiet

Die vorliegende Erfindung betrifft ein Verfahren zur Herstellung eines Polyamid-Nanofaser-Produkts mittels Elektrospinnen, ein Polyamid-Nanofaser-Produkt, ein Filtermedium mit einem Polyamid-Nanofaser-Produkt sowie ein Filterelement mit einem solchen Filtermedium.

### Stand der Technik

Ultradünne Fasern (sogenannte Nanofasern, d.h. Fasern mit einem Faserdurchmesser überwiegend (>99% der Fasergesamtzahl) im Bereich < 500 nm) werden heutzutage außer durch bekannte Verfahren wie Meltblown oder Islandin-the-sea vor allem durch das sogenannte Elektrospinn-Verfahren hergestellt. Das Elektrospinnen (auch als elektrostatisches Spinnen bezeichnet) ist eine vielseitige Methode, um aus Lösungen und Schmelzen, vorwiegend von Polymeren, kontinuierliche Fasern mit Durchmessern von wenigen Mikrometern bis zu wenigen Nanometern herzustellen. Die Methode ist vielseitig anwendbar, da sich nahezu alle löslichen und schmelzbaren Polymere einsetzen lassen, die Polymere außerdem mit unterschiedlichsten Additiven - von einfachen Rußpartikeln bis zu komplexen Spezies wie Enzymen, Viren und Bakterien - ausgerüstet werden können und natürlich auch chemische Modifikationen möglich sind.

Im eigentlichen Sinn handelt es sich beim Elektrospinnen nicht um ein Faserspinnverfahren, sondern vielmehr um ein Beschichtungsverfahren mit Mikro- und Nanofaservliesen. Durch Elektrospinnen lassen sich so nahezu beliebige feste und flüssige Substrate mit einer dünnen Schicht von Polymerfaservliesen beschichten, die typischerweise Flächengewichte < 1 g/m² aufweisen. Derartige elektrogesponnene Polymerfaservliese sind ausgesprochen filigran und eigentlich nur auf Substraten zu verwenden. Durch eine signifikante Erhöhung der Produktivität des Elektrospinnverfahrens sind nun auch selbsttragende elektrogesponnene Gewebe zugänglich, die deutlich höhere Flächengewichte (bis zu 200 g/m²) aufweisen und damit nicht mehr als Beschichtungen angesehen werden können.

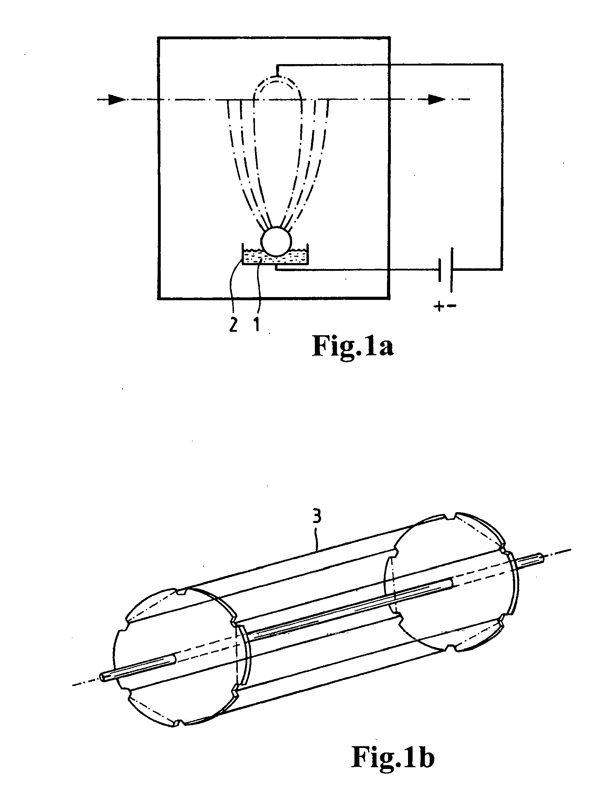

Figur 1 zeigt schematisch den Aufbau eines Elektrospinnexperiments zur Faserherstellung. Bei heutigen Elektrospinn-Apparaturen wird eine Polymerlösung oder -schmelze 1 von einem dünnen Stahldraht 3 mit einem Durchmesser von etwa 0,2 mm Dicke abgesprüht. Die Drähte sind auf einem Zylinder angeordnet und tauchen durch eine Kreisbewegung regelmäßig in die Spinnlösung ein, wobei sie mit Lösung oder Schmelze bedeckt werden. Da am Spinnlösungsvorratsbehältnis 2 Hochspannung anliegt, führt dies zum Absprühen der Lösung von den Drähten 3. Die im Rahmen der Erfindung verwendeten Drahtelektroden sind bspw. in der WO 2008/098526 und der WO 2008/028428 beschrieben.

Die angelegte Spannung bewirkt eine konusförmige Verformung des Tropfens in Richtung auf die Gegenelektrode. Auf dem Weg zur Gegenelektrode verdunstet das in der Spinnlösung enthaltene Lösungsmittel (bzw. die Schmelze erstarrt), und auf der Gegenelektrode werden mit hoher Geschwindigkeit feste Fasern mit Durchmessern von mehreren µm bis hinab zu wenigen nm abgeschieden.

Wie bereits erwähnt, können für das Elektrospinn-Verfahren nahezu alle löslichen und schmelzbaren Polymere eingesetzt werden. Bei Polytetrafluorethylen (PTFE) handelt es sich um ein Hochtemperaturpolymer, das über eine ausgezeichnete Beständigkeit gegenüber Chemikalien und Umwelteinflüssen verfügt und einen Kristallitschmelzpunkt von 327°C aufweist. Aufgrund seiner chemischen Beständigkeit vermag es sich jedoch auch kaum in Lösungsmitteln zu lösen. Es kann daher keine klassische Spinnlösung für einen Elektrospinnprozess bereitgestellt werden, um daraus feine Fasern im nm- und/oder Submikrobereich herzustellen. Auch PTFE-Fasern, die auf der Basis eines Schmelze-Elektrospinning-Verfahrens hergestellt wurden, sind bisher nicht verfügbar. Der Grund hierfür liegt im relativ hohen Schmelzbereich und der Zersetzungsneigung der Schmelze unter Abspaltung des giftigen Fluorwasserstoffs. Darüber hinaus neigt das PTFE zum Kriechen. Generell sind die vorhandenen Verfahren zur Verarbeitung von PTFE sehr aufwändig und in ihrer Anwendbarkeit auf die Herstellung relativ einfacher Press- und Sinterteile aus Pulvern und Pasten begrenzt.

Dennoch stellt das PTFE mit seinen hervorragenden Elektreteigenschaften und seiner ausgeprägten Hydrophobie ein für Filtrationszwecke sehr interessantes Material dar. Besonders die z.B. durch die Corona-Entladung erzeugten negativen Ladungen können gut auf PTFE-Oberflächen gespeichert werden. Eine Entladung von PTFE durch Feuchtigkeit findet nur sehr langsam statt, da das Material, wie bereits erwähnt, sehr hydrophob ist.

Da sich PTFE praktisch nicht zu dünnen Fasern verspinnen lässt, sondern faserähnliche Strukturen nur durch das Verstrecken von PTFE-Filmen erhalten werden können, gehen bereits bekannte Lösungen von "faserartigen" Membranen aus. Diese können mit technisch hohem Aufwand aus PTFE hergestellt und anschließend gegebenenfalls nochmals mit anderen Polymerfasern befasert werden. So offenbart bspw. die EP 1 878 482 ein Filtermedium mit einer porösen PTFE-Membran, einem luftdurchlässigen Stützelement und einer aus durch Elektrospinnen von polymeren Fasern gebildeten Faserstofflage (web layer).

Bekannt aus dem Stand der Technik sind außerdem mikroporöse PTFE-Membranen, die in Bekleidungsstücken verwendet werden.

Eine andere Strategie ist es, auf andere Fluorpolymere auszuweichen und somit die gewünschten Eigenschaften des PTFE zu "imitieren". So offenbart bspw. die WO 2009/018463 verschiedene Blends aus unterschiedlichen Fluorpolymeren, die aus einer Acetonlösung zu einer Feinfaserschicht versponnen und anschlie-ßend durch hochenergetische Elektronenstrahlen vernetzt werden. Dieses Verfahren ist jedoch sehr aufwändig und die dabei gewonnene Feinfaserschicht aus Fluorpolymeren kann anschließend nur für den beschriebenen Anwendungszweck der Abtrennung von Wasser aus flüssigen Kohlenwasserstoff-Gemischen (z.B. Diesel) verwendet werden.

Die US 2010/0193999 offenbart ein verbessertes Verfahren zur Herstellung einer PTFE-Fasermatte durch Elektrospinnen von PTFE-Dispersionen mit einer Viskosität von mindestens 50.000 cP. Dabei wird die elektrostatisch aufgeladene Dispersion auf einem Target gesammelt und bildet dort ein Vorprodukt, aus dem durch Erhitzen das Lösungsmittel entfernt und so die PTFE-Fasermatte ausgebildet wird. Das Dokument enthält keinerlei Hinweise auf die Durchmesser der erzeugten PTFE-Fasern. Weitere Informationen bzgl. der Verarbeitung und des Elektrospinnens von PTFE aus einer wässrigen oder anderen Dispersionen werden in den US-Patenten 4,323,525, 4,127,706 und 4,044,404 gegeben. Die darin offenbarten Faserdurchmesser der PTFE-Fasern liegen im Bereich von 0,1 bis 25 Mikrometer.

### Offenbarung der Erfindung

Es ist daher die Aufgabe der vorliegenden Erfindung, ein Verfahren zur Herstellung eines Nanofaser-Produktes, welches mit PTFE-Partikeln versehen ist, insbesondere welches mit PTFE-Partikeln behaftete Nanofasern aufweist, d. h. ein Produkt, das Fasern mit einem Faserdurchmesser überwiegend (>99% der Fasergesamtzahl) im Bereich < 500 nm, sowie PTFE-Partikel aufweist, welche insbesondere an den Nanofasern haften, bereitzustellen. Eine weitere Aufgabe der vorliegenden Erfindung liegt darin, ein solches Nanofaser-Produkt aufweisendes Filtermedium, insbesondere zur Luftfiltration, bereitzustellen.

Diese und weitere Aufgaben werden durch das Verfahren nach Anspruch 1 sowie durch das Polyamid-Nanofaser-Produkt nach Anspruch 9 gelöst.

In einer besonderen Ausgestaltung des erfindungsgemäßen Herstellverfahrens handelt es sich bei dem leitfähigkeitssteigernden Additiv um ein säurebeständiges Additiv, insbesondere auf Basis von einem oder mehrerer organischer Salze, vorzugsweise auf Basis von quartären Ammoniumverbindungen, weiter vorzugsweise auf Basis von Tetraalkylammoniumethylsulfat handelt, welches im Speziellen in einem Lösungsmittel gelöst zugegeben wird.

In einer besonders bevorzugten Ausführungsform der Erfindung weist das Additiv eine Tensidwirkung auf, was eine bessere Faserbildung bewirkt. Grund hierfür ist eine vorteilhafte Umhüllung der PTFE-Partikel durch das tensidische Additiv.

Bei vorteilhaften Weiterbildungen werden der Spinnlösung PTFE-Anteile im Bereich von 0,1 bis 10 Gew.-% des Gesamtansatzes, vorzugsweise 5 bis 7,5 Gew.-% des Gesamtansatzes zugesetzt und der Anteil des Additivs beträgt 0,1 bis 10 Gew.-% des Gesamtansatzes. Insbesondere beträgt der Additiv-Anteil 0,5 bis 1,0 Gew.-% des Gesamtansatzes. Als Gesamtansatz ist diejenige Zusammensetzung der Spinnlösung zu verstehen, die nach Zugabe sämtlicher Bestandteile und Additive, also beim eigentlichen Spinnvorgang, vorliegt. Es hat sich gezeigt, dass sich bei den genannten Zusammensetzungen der Spinnlösung einerseits eine ausreichend hohe Leitfähigkeit der Spinnlösung ergibt, anderseits der Gefahr eines Ausfallens des Polyamids, insbesondere durch eine zu hohe Zugabe von Additiven, ausreichend Rechnung getragen wird.

In weiteren vorteilhaften Weiterbildungen der Erfindung wird der Zusatz des leitfähigkeitssteigernden Additivs so gewählt, dass die Leitfähigkeit > 1000 µS/cm beträgt. In der Praxis hat sich insbesondere ein Gesamtansatz der Spinnlösung bewährt, welcher zwischen 10 bis 20 Gew.-% Polyamid und 70 bis 90 Gew.-% einer Mischung von Ameisen- und Essigsäure aufweist, wobei vorzugsweise ein Mengen-Verhältnis Ameisensäure: Essigsäure = 1:1,1 bis 1:3 vorliegt.

In bevorzugter Weise wird das PTFE als Pulver zugegeben, was gegenüber der Zugabe als Dispersion den Vorteil hat, dass das Polyamid nicht durch Dispersionsmittel Wasser ausgefällt werden kann. Die Zugabe als Dispersion weist demgegenüber den Vorteil auf, dass eine bessere Dosierbarkeit gewährleistet ist.

Erfindungsgemäß werden Polyamid-Nanofasern bereitgestellt, die PTFE-Partikel enthalten, wobei die Nanofasern bzw. das Nanofaser-Produkt in einer bevorzugten Ausführungsform einen mittleren (arithmetisches Mittel) Faserdurchmesser zwischen 10 bis 500 nm, vorzugsweise 80 bis 220 nm aufweisen. Hinsichtlich der Bestimmung des mittleren Faserdurchmessers wird auf das durch die DE 10 2009 043 273 A1 beschriebene Verfahren Bezug genommen.

Ebenfalls erfindungsgemäß wird ein Filtermedium mit dem erfindungsgemäßen Nanofaser-Produkt bereitgestellt, wobei das Filtermedium in einer besonders bevorzugten Ausführungsform eine mit den erfindungsgemäßen Nanofasern bzw. dem erfindungsgemäßen Nanofaser-Produkt beschichtete weitere Filterlage aufweist, die insbesondere auf Cellulose oder synthetischem Medium basiert.

Das erfindungsgemäße Filterelement kann insbesondere zur Flüssigkeitsfiltration, Kfz-Innenraumfiltration und/oder Motorluftfiltration verwendet werden.

### Kurze Beschreibung der Zeichnungen

Die Erfindung wird im Folgenden anhand der Zeichnungen näher beschrieben. Dabei zeigen
- Fign. 1a und 1b: schematisch den Aufbau eines Elektrospinnexperiments zur Faserherstellung;
- Fign. 2 und 3: rasterelektronenmikroskopische Aufnahmen eines befaserten Papiersubstrats ohne die Verwendung eines erfindungsgemäßen Additivs;
- Fign. 4 bis 6: rasteelektronenrmikroskopische Aufnahmen eines befaserten Papiersubstrats unter Verwendung eines erfindungsgemäßen Additivs; und
- Fign. 7 bis 10: Anwendungsmöglichkeiten der erfindungsgemäßen Fasern.

### Ausführungsform(en) der Erfindung

Bei der klassischen Herstellung von PTFE durch Emulsionspolymerisation fällt dieses in Form einer Dispersion an, woraus sehr leicht PTFE-Pulver mit nahezu beliebigen Partikeldurchmessern gewonnen werden können. Erfindungsgemäß werden nun solche PTFE-Partikel genutzt, um daraus mit PTFE-Partikeln behaftete Polyamid-Nanofasern herzustellen. PTFE ist zwar in allen Lösungsmitteln praktisch unlöslich, dennoch können PTFE-Partikel sehr gut in verschiedenen Lösungsmitteln dispergiert werden. Diese Dispersionen sind relativ stabil und lagerfähig.

Zur Durchführung der Erfindung wurden den Spinnlösungen PTFE-Partikel, insbesondere als PTFE-Pulver oder als Dispersion (tensidstabile wässrige Lösung) im Bereich von 0,1 bis 7,5 Gew.-%, vorzugsweise im Bereich von 5,0 bis 7,5 Gew.-% zugesetzt. Beim Verspinnen dieser Lösungen unter den üblichen Bedingungen (s. Ausführungsbeispiele) wurde jedoch festgestellt, dass sich die Bildung von Nanofasern während des Spinnprozesses stark verringert oder sogar ganz unterdrückt wurde. Der Grund dafür liegt offenbar in der Reduzierung der Leitfähigkeit der Spinnlösung durch den Zusatz der PTFE-Partikel. Es wird angenommen, dass dies daran liegt, weil es sich bei den PTFE-Partikeln um elektrisch isolierende Partikel handelt, bei deren Zusatz zur Spinnlösung die Wasserstoffbrückenbindungen unterbrochen werden, so dass die Leitfähigkeit der Lösung stark abnimmt und aufgrund mangelnder Ladungsträgerkonzentration kein Elektrospinning von Nanofasern stattfinden kann.

Erfindungsgemäß wurden den Spinnlösungen daher leitfähigkeitssteigernde Additive zugesetzt. Allgemein können die Leitfähigkeitsadditive Salze sein, die aus den folgenden Anionen bestehen: Halogenide, Carboxylate, Phosphonate, Thiocyanate, Isothiocyanante, Dicyanamide, (Alkyl-)Sulfate, (Alkyl-)Sulfonate, Tetrafluoroborat, Hexafluoro-Phosphonat oder Bis(trifluormethylsulfonyl)imid in Kombination mit unterschiedlich substituierten Ammonium- und/oder Phosphonium-Kationen. Als besonders effektiv haben sich dabei Sulfate auf Basis von Tetraalkylammonium-Verbindungen wie z.B. Tetraalkylammoniumsulfat herausgestellt. Als Beispiele für solche Additive können Deuteron^{®} LE 151, ein Tetraalkylammoniumethylsulfat, gelöst in geeigneten Lösungsmittel, sowie Deuteron^{®} LE 100 LV, eine quaternäre Ammoniumverbindung, beide erhältlich von der Deuteron GmbH, Achim, genannt werden. Durch den Zusatz dieser Leitfähigkeits-Additive konnte die Leitfähigkeit der Spinnlösungen mit den darin enthaltenen PTFE-Partikeln um den Faktor 10-15 erhöht werden (vgl. Ausführungsbeispiele), um daraus mit PTFE-Partikeln behaftete Polyamid-Nanofasern zu erzeugen. Vorteilhafterweise wurden Nanofaserlagen auf Basis von Polyamid, (z.B. BASF Ultramid B24) mit in den Lagen regelmäßig verteilten PTFE-Partikeln erzeugt.

Im Folgenden werden Ausführungsbeispiele für das erfindungsgemäße Verfahren gegeben.
Als Polymer wurde Polyamid (z.B. BASF Ultramid B24, es können jedoch auch andere Polyamide verwendet werden) eingesetzt. Aus dem Polymer wurden separate Spinnlösungen hergestellt. Der Grundansatz der Spinnlösungen wies folgende Zusammensetzung auf:

### Polyamid-Ansatz:

16,75 g Polyamid (BASF Ultramid B24)
34,95 g Ameisensäure (99%ig)
48,3 g Essigsäure (96%ig)
Ameisensäure und Essigsäure dienen dabei als Lösungsmittel für das Polyamid.
**PTFE-Partikel:**
PTFE-Pulver PRO 470 PP der Firma Proline

### Leitfähigkeitsadditive:

Deuteron^{®} LE 151
Deuteron^{®} 100 LV

### Substrat für die Beschichtung mit Nanofasern:

Cellulose-Papier mit Flammschutz-Ausrüstung
Breite: 50 cm
Flächengewicht: 130 g/m²
Dicke: 0,44 mm
Druckabfall: 70 Pa bei 7,5 cm/s Anströmgeschwindigkeit
Luftdurchlässigkeit: 215 l/m² bei 200 Pa

Die Ansätze wurden mit entsprechenden Mengen an PTFE-Partikeln und Leitfähigkeitsadditiv versetzt und gründlich verrührt. Das Additiv wurde dabei in einem Bereich von 0,1 - 10 %, bevorzugt in einem Bereich von 0,5 - 1,0 % des Gesamtansatzes zugegeben.

### Elektrospinnen:

Für die Spinnversuche wurde eine Labor-Spinnanlage mit rotierender Elektrode der Firma Elmarco (NS Lab 500) gemäß WO 2008/8028428 verwendet. Der Abstand zwischen Draht- und Gegenelektrode betrug 170 mm. Die Rotationsgeschwindigkeit der Elektrode betrug 6,1 Umdrehungen pro Minute (38 Hz). Spannung und Strom, bei denen das erste Abspinnen beobachtet wurde, wurden notiert, regulär wurden die Lösungen bei 80 kV versponnen. Das Papier-Substrat wurde mit einer Geschwindigkeit von 1,56 m/min beschichtet. Je nach Lösung, zugefügtem Additiv und Substrat traten während des Spinnens unterschiedlich starke Ströme auf, die ebenfalls notiert wurden. Sämtliche Experimente wurden bei Raumtemperatur (25°C) durchgeführt.

### Vergleichsbeispiel

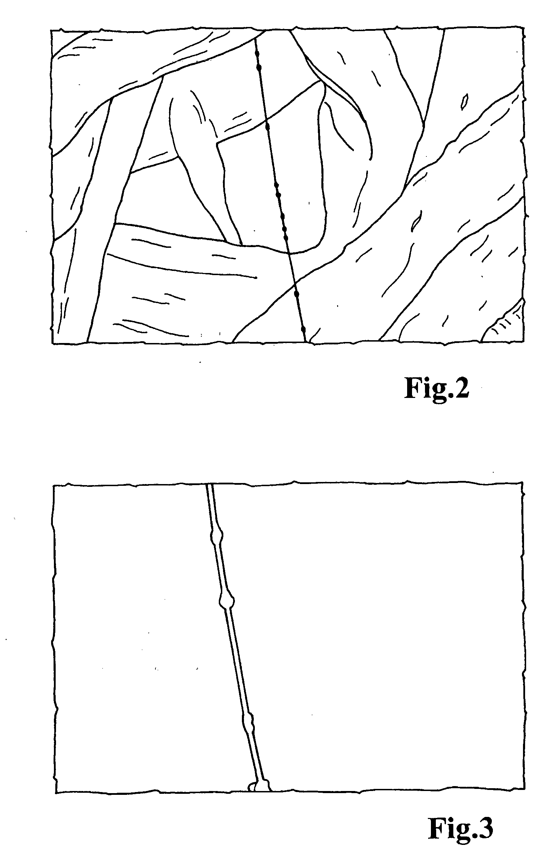

Polyamid und PTFE-Partikel ohne Zugabe von leitfähigkeitssteigerndem Additiv: Es wurde der Standard-Polyamidansatz (Gesamtmasse 100g) verwendet (vgl. weiter oben) und darin 5 g PTFE-Pulver dispergiert. Die Dispersion wurde anschließend 2 h lang gründlich gerührt. Die gemessene Leitfähigkeit (Gerätename: Hanna HI 9835) der Dispersion betrug 104 µS/cm. Beim Elektrospinnvorgang wurde erst bei einer angelegten Spannung von 80 kV eine - außerordentlich geringe - Tendenz zur Bildung von Nanofasern beobachtet, ein Stromfluss war nicht messbar. Eine anschließende rasterelektronenmikroskopische Untersuchung (Oxford Instruments) des befaserten Papier-Substrats ergab, dass sich nur ganz vereinzelt Nanofasern auf dem Substrat befanden (Fig. 2). Bei den wenigen sphärischen Gebilden entlang der einzelnen Fasern (Fig. 2) handelte es sich jedoch um PTFE-Partikel, wie mittels EDX-Analyse (Fluor; Gerätename: EVO 40) nachgewiesen werden konnte.

### Beispiel 1

Polyamid mit 5% PTFE-Partikel-Zusatz und Deuteron^{®} LE 151 als leitfähigkeitssteigerndem Additiv:

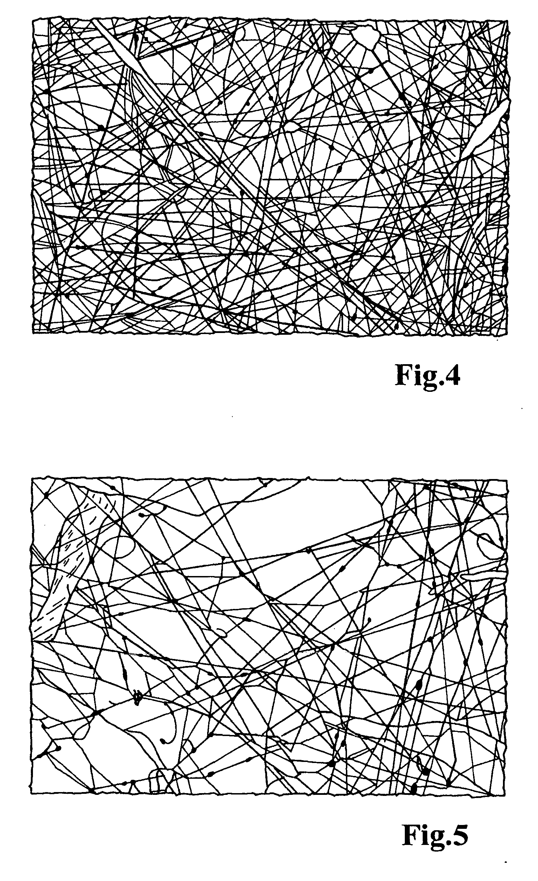

Es wurde der Standard-Polyamidansatz (Gesamtmasse 100g) verwendet und darin 5 g PTFE-Pulver dispergiert sowie 0,6 g Deuteron^{®} LE 151 gelöst. Die hergestellte Dispersion wurde 2 h lang gründlich gerührt. Die gemessene Leitfähigkeit der Dispersion betrug 1624 µS/cm. Eine erste Bildung von Nanofasern wurde erst bei einer angelegten Spannung von 60 kV beobachtet, ein Strom war nicht messbar. Das Papier-Substrat wurde kontinuierlich mit einer Laufgeschwindigkeit von 1,56 m/min beschichtet. Dabei wurde eine Spannung von 80 kV angelegt, die dabei gemessene Stromstärke betrug 0,021 mA. Eine anschließende rasterelektronenmikroskopische Untersuchung (Oxford Instruments) des befaserten Papier-Substrates ergab, dass sich eine große Anzahl von Nanofasern auf dem Substrat gebildet hatten (Fig. 3). Bei den sphärischen Gebilden bzw. Verdickungen entlang der einzelnen Fasern (Fig. 4) handelte es sich um PTFE-Partikel, wie mittels EDX-Analyse (Fluor; EVO 40) nachgewiesen werden konnte.

### Beispiel 2

Polyamid mit 7,5% PTFE-Partikel-Zusatz und Deuteron^{®} LE 151 als leitfähigkeitssteigerndem Additiv:

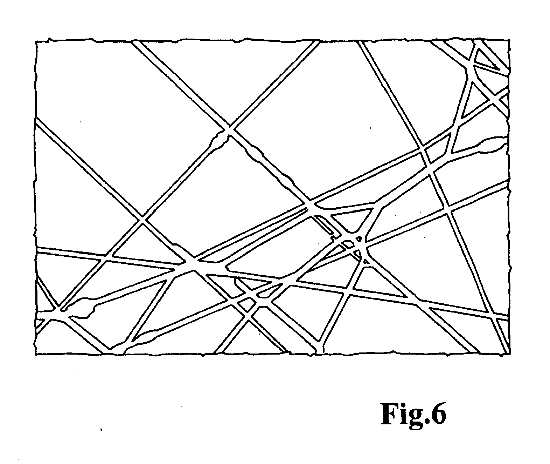

Es wurde der Standard-Polyamidansatz (Gesamtmasse 100g) verwendet und darin 7,5 g PTFE-Pulver dispergiert sowie 0,9 g Deuteron^{®} LE 151 gelöst. Die hergestellte Dispersion wurde 2 h lang gründlich gerührt. Die gemessene Leitfähigkeit der Dispersion betrug 2100 µS/cm. Eine erste Bildung von Nanofasern wurde erst bei einer angelegten Spannung von 60 kV beobachtet, wobei eine Stromstärke von 0,002 mA messbar war. Das Papier-Substrat wurde kontinuierlich mit einer Laufgeschwindigkeit von 1,56 m/min beschichtet. Dabei wurde eine Spannung von 80 kV angelegt, die dabei gemessene Stromstärke betrug 0,026 mA. Eine anschließende rasterelektronenmikroskopische Untersuchung (Oxford Instruments) des befaserten Papier-Substrates ergab, dass sich eine große Anzahl von Nanofasern auf dem Substrat gebildet hatten (Fig. 5). Bei den sphärischen Gebilden bzw. Verdickungen entlang der einzelnen Fasern (Fig. 6) handelte es sich um PTFE-Partikel, wie mittels EDX-Analyse (Fluor; EVO 40) nachgewiesen werden konnte.

### Beispiel 3

Polyamid mit 5% PTFE-Partikel-Zusatz und Deuteron^{®} LE 100 LV als leitfähigkeitssteigerndem Additiv:

Es wurde der Standard-Polyamidansatz (Gesamtmasse 100g) verwendet und darin 5 g PTFE-Pulver dispergiert sowie 0,6 g Deuteron^{®} LE 100 LV gelöst. Die hergestellte Dispersion wurde 2 h lang gründlich gerührt. Die gemessene Leitfähigkeit der Dispersion betrug 1378 µS/cm. Eine erste Bildung von Nanofasern wurde erst bei einer angelegten Spannung von 70 kV beobachtet, ein Strom war nicht messbar. Das Papier-Substrat wurde kontinuierlich mit einer Laufgeschwindigkeit von 1,56 m/min beschichtet. Dabei wurde eine Spannung von 80 kV angelegt, die dabei gemessene Stromstärke betrug 0,018 mA. Die anschlie-βenden rasterelektronenmikroskopischen Untersuchungen (Oxford Instruments) des befaserten Papier-Substrates ergaben ähnliche Morphologien wie in Beispiel 1. In der Nanofasermatrix fanden sich ebenfalls eine große Anzahl PTFE-Partikel, die mittels EDX-Messungen (EVO 40) identifiziert werden konnten.

### Beispiel 4

Polyamid mit 7,5% PTFE-Partikel-Zusatz und Deuteron^{®} LE 100 LV als leitfähigkeitssteigerndem Additiv:

Es wurde der Standard-Polyamidansatz (Gesamtmasse 100g) verwendet und darin 7,5 g PTFE-Pulver dispergiert sowie 0,9 g Deuteron^{®} LE 100 LV gelöst. Die hergestellte Dispersion wurde 2 h lang gründlich gerührt. Die gemessene Leitfähigkeit der Dispersion betrug 1878 µS/cm. Eine erste Bildung von Nanofasern wurde bei einer angelegten Spannung von 60 kV beobachtet, ein Strom war nicht messbar. Das Papier-Substrat wurde kontinuierlich mit einer Laufgeschwindigkeit von 1,56 m/min beschichtet. Dabei wurde eine Spannung von 80 kV angelegt, die dabei gemessene Stromstärke betrug 0,022 mA. Die anschlie-βenden rasterelektronenmikroskopischen Untersuchungen (Oxford Instruments) des befaserten Papier-Substrates ergaben ähnliche Morphologien wie in Beispiel 2. In der Nanofasermatrix fanden sich ebenfalls eine große Anzahl PTFE-Partikel, die mittels EDX-Messungen (EVO 40) identifiziert werden konnten.

Anhand der Versuche konnte gezeigt werden, dass der Zusatz von leitfähigkeitssteigernden Additiven eine Verspinnbarkeit von Polyamid-Lösungen zu Nanofasern mit hinzugesetzten PTFE-Partikeln ermöglicht, was ohne diese Additive nicht möglich ist. Der Grund hierfür liegt darin, dass der Zusatz von PTFE-Partikeln zur Spinnlösung zu einer Abnahme der Leitfähigkeit führt. Eine deutliche höhere Leitfähigkeit, etwa im Bereich von oberhalb 1000 µS/cm ist jedoch erforderlich, um die Ausbildung von sog. Faserjets zu ermöglichen. Daher werden im Sinne der Erfindung leitfähigkeitssteigernde Additive hinzugesetzt, um den Effekt der PTFE-Partikel zu kompensieren.

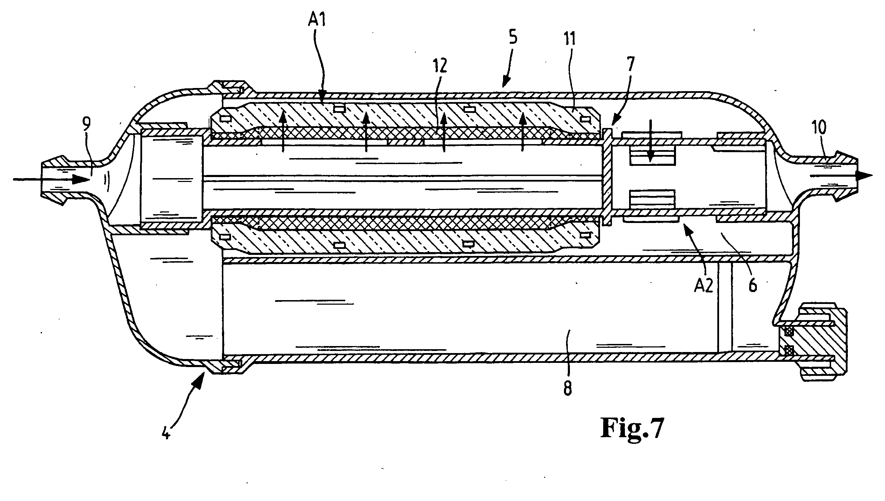

Die erfindungsgemäßen Nanofasern mit PTFE-Partikeln weisen einen mittleren Faserdurchmesser zwischen 10 bis 400 nm, insbesondere zwischen 80 bis 220 nm auf (Messmethode gemäß DE 10 2009 043 273 A1). Die PTFE-Partikel an den Nanofasern besitzen einen mittleren (arithmetisches Mittel) Teilchendurchmesser im Bereich von 0, 2 bis 6 µm. Die Nanofasern können auf einem entsprechenden Träger (flammgeschütztes und phenolharzgehärtetes Cellulose-Medium oder synthetisches Medium) auch als Koaleszer/Wasserabscheide-Medien eingesetzt werden, da ein Wechsel von hydrophilen (Polyamid-Nanofasern) und hydrophoben Bereichen (PTFE-Partikel) eine Koaleszierung, d.h. eine Separation von Wasser aus den Kraftstoffen in Form von Wassertröpfchen, bewirkt. Figur 7 (vgl. auch EP 2 226 107) zeigt einen Wasserabscheider 4 mit einem Gehäuse 5 mit einer darin ausgebildeten Abscheidekammer 6, einem darin angeordneten Abscheideelement 7 und einem darunter angeordneten Sammelraum 8 für aus dem Kraftstoff abgeschiedenes Wasser. Außerdem sind ein Zulauf 9 und ein Ablauf 10 für den Kraftstoff vorgesehen. Das Abscheideelement 7 umfasst zwei Abscheidestufen A1, A2, von denen die erste Abscheidestufe A1 ein Filtermedium 12 enthält, welches aus einem Cellulose-Träger mit PTFE-Partikel-haltigen Nanofasern besteht. Das Filtermedium 12 ist von einem Element 11 mit einer Vielzahl von Durchtrittsöffnungen umgeben, welches eine abströmseitige Kontur bildet und abströmseitig des Filtermediums 12 und des Elements 11 Tropfen des aus dem Kraftstoff abgetrennten Wassers erzeugt. Dem Fachmann ist bekannt, dass auch andere Ausführungsformen möglich sind.

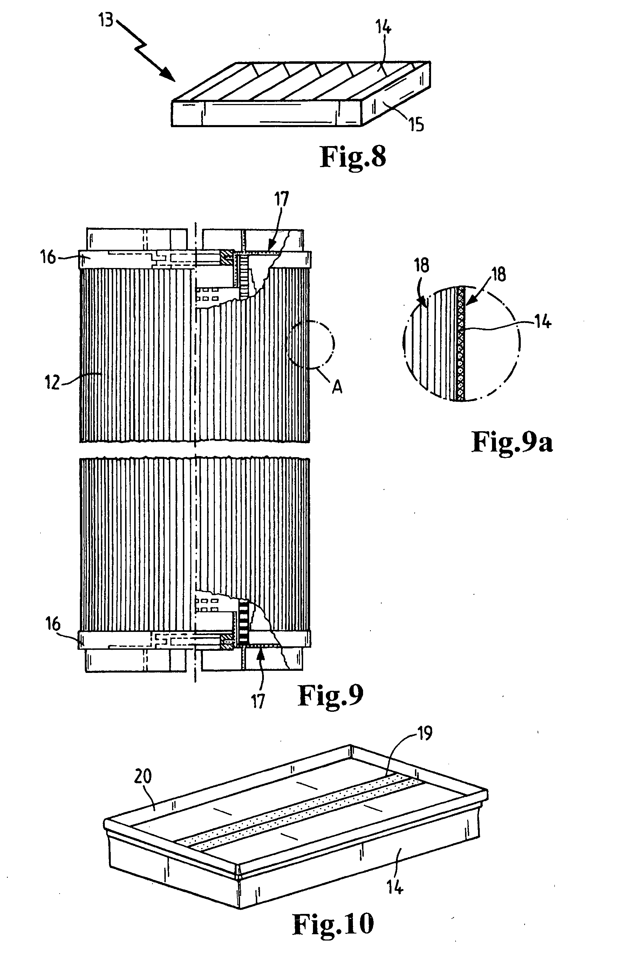

Eine weitere Anwendung der erfindungsgemäßen Nanofasern liegt in der Kfz-Innenraumfiltration. Die erfindungsgemäßen Nanofasern können bzw. das Nanofaser-Produkt mit PTFE-Partikeln kann dabei zur Beschichtung von Polypropylenvliesen verwendet werden. Die nanofaserbeschichteten Polypropylenvliese können anschließend plissiert und daraus Innenraumfilter 13 für den Kfz-Bereich (s. Fig. 8) gefertigt werden. Die Figur zeigt dabei das Vlies mit dem PTFE-haltigen Polyamid-Nanofaser-Produkt 14 mit den entsprechenden Seitenbandstreifen 15. Die bevorzugten geometrischen Daten sind in der Tabelle 1 angegeben. Dem Fachmann ist bekannt, dass auch andere Ausführungsformen, wie z.B. Rundelemente, möglich sind.

**Tabelle 1**

| | |
|---|---|
| Filtergeometrie (L x B x H; mm) | 230 x 238 x 30 |
| Anströmfläche (m²) | 0,05474 |
| Medienfläche (m²) | 0,613088 |
| Faltenhöhe (mm) | 28 |
| Faltenabstand (mm) | 5 |
| Faltenanzahl | 46 |

Noch eine weitere Anwendung des erfindungsgemäßen Nanofaser-Produktes für ein Filterelement zur Filtration von Flüssigkeiten ist in Figur 9 gezeigt. Das Filterelement weist ein Filtermedium 12 und Endscheiben 16 auf, wobei das Filtermedium 12 insbesondere zylindrisch ausgebildet ist, und die Endscheiben 16 an Stirnseiten 17 des Filtermediums 12 angeordnet sind. Dabei verfügt das Filtermedium 12 über mindestens zwei unterschiedliche Filterlagen 18, wobei eine dieser Filterlagen 18 durch das Polyamid-Nanofaser-Produkt mit PTFE-Partikel 14 gebildet ist. Bei den zu filtrierenden Flüssigkeiten kann es sich z.B. um Kühlmittelflüssigkeiten handeln.

Schließlich zeigt die Figur 10 eine Anwendung des erfindungsgemäßen Nanofaser-Produktes bei der Kfz-Motorzuluftfiltration. Das Polyamid-Nanofaser-Produkt mit PTFE-Partikeln kann nach Auftrag eines Haftvermittlers auf einem entsprechenden Träger (flammgeschütztes und phenolharzgehärtetes Cellulose-Medium) aufgebracht werden. Das so hergestellte Filtermedium mit PTFE-Partikel-haltigem Nanofaser-Produkt 14 wird anschließend gefaltet mit einer Stützraupe aus Kleber 19 und anschließend mit einer Dichtlippe aus Polyurethan 20 versehen. Neben diesen Flachfilterelementen sind dem Fachmann auch andere Ausführungsformen, wie z.B. Rundfilterelemente, bekannt. Diese beinhalten ebenfalls ein Filtermedium, welches aus Cellulose mit Polyamid-Nanofasern und PTFE-Partikeln besteht und Dichtungen an Ober- und Unterseite aufweist.

## Patentansprüche

1. Verfahren zur Herstellung eines Polyamid-Nanofaser-Produkts (14), welches PTFE-Partikel aufweist, insbesondere welches mit PTFE-Partikeln behaftet ist, mittels Elektrospinnen aus Spinnlösungen, enthaltend Polyamid, PTFE und ein leitfähigkeitssteigerndes Additiv.

2. Verfahren nach Anspruch 1, **dadurch gekennzeichnet, dass** es sich bei dem leitfähigkeitssteigernden Additiv um ein säurebeständiges und/oder tensidisches Additiv, insbesondere auf Basis von einem oder mehrerer organischer Salze, vorzugsweise auf Basis von quartären Ammoniumverbindungen, weiter vorzugsweise auf Basis von Tetraalkylammoniumethylsulfat handelt.

3. Verfahren nach einem der Ansprüche 1 bis 2, **dadurch gekennzeichnet, dass** der Spinnlösung PTFE-Anteile im Bereich von 0,1 bis 10 Gew.-% des Gesamtansatzes, vorzugsweise im Bereich von 5 bis 7,5 Gew.-% des Gesamtansatzes, zugesetzt werden.

4. Verfahren nach einem der vorstehenden Ansprüche, **dadurch gekennzeichnet, dass** der Anteil des leitfähigkeitssteigernden Additivs in der Spinnlösung 0,1 bis 10 Gew.-% des Gesamtansatzes, vorzugsweise 0,5 bis 1,00 Gew.-% des Gesamtansatzes, beträgt.

5. Verfahren nach einem der vorstehenden Ansprüche, **dadurch gekennzeichnet, dass** der Zusatz des leitfähigkeitssteigernden Additivs so gewählt wird, dass die Leitfähigkeit der Spinnlösung > 1000 µS/cm beträgt.

6. Verfahren nach einem der vorstehenden Ansprüche, **dadurch gekennzeichnet, dass** der Gesamtansatz der Spinnlösung zwischen 10 bis 20 Gew.-% Polyamid und 70 bis 90 Gew.-% einer Mischung von Ameisen- und Essigsäure aufweist, wobei vorzugsweise ein Mengen-Verhältnis Ameisensäure: Essigsäure = 1:1,1 bis 1:3 vorliegt.

7. Verfahren nach einem der vorstehenden Ansprüche, **dadurch gekennzeichnet, dass** das PTFE als Pulver oder als Dispersion, insbesondere wässrige Dispersion, zugegeben wird.

8. Verfahren nach einem der vorhergehenden Ansprüche, **dadurch gekennzeichnet, dass** das PTFE als PTFE-Pulver mit einem mittleren Teilchendurchmesser im Bereich von 0, 2 µm, einer Dichte von 2200 kg/m³ und/oder einer Schmelztemperatur von 320°C zugegeben wird.

9. Polyamid-Nanofaser-Produkt (14), welches PTFE-Partikel aufweist, insbesondere welches mit PTFE-Partikeln behaftete Nanofasern aufweist.

10. Polyamid-Nanofaser-Produkt (14) nach Anspruch 9, **dadurch gekennzeichnet, dass** es einen mittleren Faserdurchmesser zwischen 10 bis 500 nm, insbesondere 80 bis 220 nm aufweist.

11. Polyamid-Nanofaser-Produkt (14) nach Anspruch 8 oder 9, **dadurch gekennzeichnet, dass** die PTFE-Partikel einen mittleren Teilchendurchmesser im Bereich von 0, 2 µm aufweisen.

12. Filtermedium (12), enthaltend ein Polyamid-Nanofaser-Produkt (14) nach einen der Ansprüche 9 bis 11.

13. Filtermedium (12) nach Anspruch 12, **dadurch gekennzeichnet, dass** es eine mit dem Polyamid-Nanofaser-Produkt (14) beschichtete weitere Filterlage, insbesondere auf Cellulose oder synthetischem Medium basierend, aufweist.

14. Filtermedium (12) nach einem der Ansprüche 12 oder 13, **dadurch gekennzeichnet, dass** das synthetische Medium ausgewählt ist aus der Gruppe bestehend aus Meltblown und einem Spinnvlies, insbesondere aus PP, PET oder PBT.

15. Filterelement mit einem Filtermedium (12) nach einem der Ansprüche 12 bis 14, insbesondere zur Flüssigkeitsfiltration, Kfz-Innenraumfiltration und/oder Motorluftfiltration.

## Claims

1. Method for manufacturing a polyamide nanofiber product (14) which features PTFE particles, in particular which is endowed with PTFE particles, by means of electrospinning from spinning solutions, containing polyamide, PTFE, and a conductivity enhancing additive.

2. Method according to claim 1, **characterized in that** the conductivity enhancing additive is an acid-resistant and/or a surfactant-based additive, in particular based on one or more organic salts, preferably based on quaternary ammonium compounds, further preferably based on tetraalkylammonium ethyl sulfate.

3. Method according to one of the claims 1 to 2, **characterized in that** PTFE parts ranging from 0.1 to 10 % by weight of the total batch, preferably ranging from 5 to 7.5 % by weight of the total batch, are added to the spinning solution.

4. Method according to one of the above claims, **characterized in that** the part of the conductivity enhancing additive in the spinning solution is 0.1 to 10 % by weight of the total batch, preferably 0.5 to 1.00 % by weight of the total batch.

5. Method according to one of the above claims, **characterized in that** the addition of the conductivity enhancing additive is selected such that the conductivity of the spinning solution is > 1000 µS/cm.

6. Method according to one of the above claims, **characterized in that** the total batch of the spinning solution features between 10 to 20 % by weight of polyamide and 70 to 90 % by weight of a mixture of formic and acetic acid, preferably with a proportion of formic acid:acetic acid = 1:1.1 to 1:3.

7. Method according to one of the above claims, **characterized in that** the PTFE is added as powder or as dispersion, in particular aqueous dispersion.

8. Method according to one of the above claims, **characterized in that** the PTFE is added as PTFE powder having an average particle diameter in the range of 0.2 µm, a density of 2200 kg/m³ and/or a melting temperature of 320 °C.

9. Polyamide nanofiber product (14) which features PTFE particles, in particular which features nanofibers endowed with PTFE particles.

10. Polyamide nanofiber product (14) according to claim 9, **characterized in that** it has an average fiber diameter between 10 to 500 nm, in particular 80 to 220 nm.

11. Polyamide nanofiber product (14) according to claim 8 or 9, **characterized in that** the PTFE particles feature an average particle diameter in the range of 0.2 µm.

12. Filter medium (12), containing a polyamide nanofiber product (14) according to one of the claims 9 to 11.

13. Filter medium (12) according to claim 12, **characterized in that** it features a further filter layer, in particular based on cellulose or synthetic medium, coated with the polyamide nanofiber product (14).

14. Filter medium (12) according to one of the claims 12 or 13, **characterized in that** the synthetic medium is selected from the group consisting of meltblown and spunbonded fleece, in particular of PP, PET or PBT.

15. Filter element with a filter medium (12) according to one of the claims 12 to 14, in particular for liquid filtration, automotive cabin air filtration, and/or engine air filtration.

## Revendications

1. Procédé de fabrication d'un produit en nanofibres de polyamide (14) qui présente des particules de PTFE, en particulier qui est doté de particules de PTFE, et qui a été obtenu par filage électrostatique à partir de solutions de filage contenant du polyamide, du PTFE et un additif augmentant la conductivité.

2. Procédé selon la revendication 1, **caractérisé en ce que** l'additif augmentant la conductivité est un additif résistant à l'acide et/ou tensio-actif, en particulier à base d'un ou plusieurs sels organiques, de préférence à base de composés d'ammonium quaternaires, en outre de préférence à base d'éthylsulfate d'ammonium tétra-alkyle.

3. Procédé selon l'une des revendications 1 à 2, **caractérisé en ce que** des parts de PTFE comprises entre 0,1 et 10 % en poids de la préparation totale, de préférence comprises entre 5 et 7,5 % en poids de la préparation totale, sont additionnées à la solution de filage.

4. Procédé selon l'une des revendications précédentes, **caractérisé en ce que** la part d'additif augmentant la conductivité dans la solution de filage représente 0,1 à 10 % en poids de la préparation totale, de préférence 0,5 à 1,00 % en poids de la préparation totale.

5. Procédé selon l'une des revendications précédentes, **caractérisé en ce que** l'ajout de l'additif augmentant la conductivité est tel que la conductivité de la solution de filage est supérieure à 1000 µS/cm.

6. Procédé selon l'une des revendications précédentes, **caractérisé en ce que** la préparation totale de la solution de filage est constituée de 10 à 20 % en poids de polyamide et de 70 à 90 % en poids d'un mélange d'acide formique et d'acide acétique, de préférence avec un rapport quantitatif acide formique:acide acétique de1:1,1à1:3.

7. Procédé selon l'une des revendications précédentes, **caractérisé en ce que** le PTFE est additionné sous forme de poudre ou de dispersion, notamment de dispersion aqueuse.

8. Procédé selon l'une des revendications précédentes, **caractérisé en ce que** le PTFE est additionné sous forme de poudre de PTFE avec un diamètre de particules moyen de 0,2 µm, une densité de 2200 kg/m3 et/ou une température de fusion de 320 °C.

9. Produit en nanofibres de polyamide (14) présentant des particules de PTFE, en particulier présentant des nanofibres dotées de particules de PTFE.

10. Produit en nanofibres de polyamide (14) selon la revendication 9, **caractérisé en ce qu'**il a un diamètre de fibres moyen compris entre 10 et 500 nm, en particulier entre 80 et 220 nm.

11. Produit en nanofibres de polyamide (14) selon la revendication 8 ou 9, **caractérisé en ce que** les particules de PTFE ont un diamètre de particules moyen de 0,2 µm.

12. Milieu filtrant (12) contenant un produit en nanofibres de polyamide (14) selon l'une des revendications 9 à 11.

13. Milieu filtrant (12) selon la revendication 12, **caractérisé en ce qu'**il présente une autre couche filtrante revêtue du produit en nanofibres de polyamide (14), notamment à base de cellulose ou de matière synthétique.

14. Milieu filtrant (12) selon l'une des revendications 12 ou 13, **caractérisé en ce que** la matière synthétique est sélectionnée dans le groupe composé de fibres fondues-soufflées et d'un non-tissé filé, notamment en PP, PET ou PBT.

15. Élément filtrant avec un milieu filtrant (12) selon l'une des revendications 12 à 14, en particulier pour la filtration de liquides, la filtration d'habitacles d'automobiles et/ou la filtration d'air de moteur.
